# EUROPEAN PATENT APPLICATION

(11) **EP 4 301 024 A1**
(43) Date of publication of application: **03.01.2024**
(21) Application number: 21937261.2
(22) Date of filing: 19.04.2021
(51) Int. Cl.: H04W 24/00, H04W 24/02, H04W 24/10

(54) **MEASUREMENT PARAMETER DETERMINATION METHOD, ELECTRONIC DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/088220
(87) International publication number: WO 2022/222010

(57) **Abstract**

Provided in the present application is a measurement parameter determination method, including: a reduced capability terminal device determining measurement parameters for the reduced capability terminal device on the basis of first configuration information. Further provided in the present application are another measurement parameter determination method, an electronic device and a storage medium.

## Description

### TECHNICAL FIELD

The disclosure relates to a technical field of the wireless communication, in particular to, methods for determining a measurement parameter, an electronic device and a storage medium.

### BACKGROUND

A terminal device with reduced capability (RedCap terminal device) having characteristics of low complexity, low cost and low capability is introduced into the new radio (NR) system. How to determine the measurement parameter for the RedCap terminal device is not clearly defined.

### SUMMARY

Embodiments of the disclosure provide methods for determining a measurement parameter, an electronic device and a storage medium, which can determine the measurement parameter for the RedCap terminal device.

In a first aspect, an embodiment of the present disclosure provides a method for determining a measurement parameter. The method includes that a RedCap terminal device determines the measurement parameter for the RedCap terminal device based on first configuration information.

In a second aspect, an embodiment of the present disclosure provides a method for determining a measurement parameter. The method includes that a network device sends first configuration information, and the first configuration information is used for a RedCap terminal device to determine the measurement parameter for the RedCap terminal device.

In a third aspect, an embodiment of the present disclosure provides a terminal device. The terminal device is a RedCap terminal device and includes a processing unit configured to determine a measurement parameter for the RedCap terminal device based on first configuration information.

In a fourth aspect, an embodiment of the present disclosure provides a network device. The network device includes a sending unit configured to send first configuration information, and the first configuration information is used for a RedCap terminal device to determine a measurement parameter for the RedCap terminal device.

In a fifth aspect, an embodiment of the present disclosure provides a terminal device including a processor and a memory, where the memory is configured to store a computer program capable of being run on the processor, and the processor is configured to perform, when executing the computer program, operations of the method for determining the measurement parameter performed by the terminal device.

In a sixth aspect, an embodiment of the present disclosure provides a network device including a processor and a memory, where the memory is configured to store a computer program capable of being run on the processor, and the processor is configured to perform, when executing the computer program, operations of the method for determining the measurement parameter performed by the network device.

In a seventh aspect, an embodiment of the present disclosure provides a chip including a processor configured to invoke and run a computer program from a memory, to cause a device on which the chip is mounted to perform the method for determining the measurement parameter performed by the terminal device.

In an eighth aspect, an embodiment of the present disclosure provides a chip including a processor configured to invoke and run a computer program from a memory, to cause a device on which the chip is mounted to perform the method for determining the measurement parameter performed by the network device.

In a ninth aspect, an embodiment of the present disclosure provides a storage medium having stored thereon an executable program that, when executed by a processor, causes the processor to implement the method for determining the measurement parameter performed by the terminal device.

In a tenth aspect, an embodiment of the present disclosure provides a storage medium having stored thereon an executable program that, when executed by a processor, causes the processor to implement the method for determining the measurement parameter performed by the network device.

In an eleventh aspect, an embodiment of the present disclosure provides a computer program product including computer program instructions, where the computer program instructions cause a computer to perform the method for determining the measurement parameter performed by the terminal device.

In a twelfth aspect, an embodiment of the present disclosure provides a computer program product including computer program instructions, where the computer program instructions cause a computer to perform the method for determining the measurement parameter performed by the network device.

In a thirteenth aspect, an embodiment of the present disclosure provides a computer program that causes a computer to perform the method for determining the measurement parameter performed by the terminal device.

In a fourteenth aspect, an embodiment of the present disclosure provides a computer program that causes a computer to perform the method for determining the measurement parameter performed by the network device.

### BRIEF DESCRIPTION OF THE DRAWINGS

FIG. 1 is a schematic diagram of a composition structure of a communication system according to an embodiment of the present disclosure;
FIG. 2 is a flowchart of an optional processing of a method for determining a measurement parameter according to an embodiment of the present disclosure.
FIG. 3 is a flowchart of another optional processing of the method for determining a measurement parameter according to an embodiment of the present disclosure.
FIG. 4 is a schematic diagram of an optional composition structure of a terminal device according to an embodiment of the present disclosure.
FIG. 5 is a schematic diagram of an optional composition structure of a network device according to an embodiment of the present disclosure.
FIG. 6 is a schematic diagram of a hardware composition structure of the electronic device according to an embodiment of the present disclosure.

### DETAILED DESCRIPTION

In order to enable a more detailed understanding of the features and technical content of the embodiments of the present disclosure, the implementations of the embodiments of the present disclosure will be described in detail below in conjunction with the accompanying drawings, which are provided for illustrative purposes only and are not intended to limit the embodiments of the present disclosure.

Before describing the embodiments of the present disclosure, the related contents will be briefly explained.

In NR technology, the minimum number of receiving antennas (ports) required by a terminal device is specified, and the minimum number of the receiving antennas is associated with a frequency band. For bands n7, n38, n41, n77, n78 and n779, the minimum number of the receiving antennas required by the terminal device is 4, and for bandwidths other than the bandwidths of the bands, the minimum number of the receiving antennas required by the terminal device is 2. The network device can determine the transmission mode of the downlink channel according to the number of the receiving antennas required by the terminal device. In particular, in the initial access stage, the network device can transmit downlink channels and signals according to the requirement of the minimum number of the receiving antennas without knowing the number of the receiving antennas required by the terminal device.

The NR system can support enhanced mobile broadband (eMBB) services to meet the requirements of high speed, high spectrum effectiveness and large bandwidth. In practical applications, besides the eMBB services, there are many different types of services, such as, sensor network services, video surveillance services and wearable services. These types of services have different requirements from the eMBB services in terms of speed, bandwidth, power consumption and cost. Terminal devices supporting these services have reduced capabilities compared with those supporting the eMBB services, and the reduced capabilities includes such as reduced supported bandwidth, relaxed processing time and reduced number of the antennas. Therefore, the NR system need to be optimized for these services and the corresponding RedCap terminal devices, and the optimized system is called the NR-light system. In the LTE technology, similar systems have been designed to support terminals with large number of connections, low power consumption and low cost, such as, machine type communication (MTC) and narrow band internet of thing (NB-IoT). In the NR system, it is desirable to introduce similar technologies to use NR technology to better support other types of services other than the eMBB services. The terminal devices supporting these types of services have the characteristics of low complexity, low cost and low capability, and are called the RedCap terminal devices.

The network device can configure the required measurements for a terminal device. Measurement configurations for different purposes in the NR system may include at least the following six items.
1) A measurement configuration (represented as MeasConfig): the MeasConfig configures the measurements to be performed by the terminal device and includes the measurements for the handover between the intra-frequency, inter-frequency and wireless access technology, which includes the s-MeasureConfig information element for configuring a reference signal receiving power (RSRP) threshold for the RedCap terminal device in a special cell (SpCell), and for controlling the terminal device to perform a measurement for a non-serving cell.

A configuration of the s-MeasureConfig information element may be as follows:

```
   s-MeasureConfig CHOICE {
   ssb-RSRP RSRP-Range,
  csi-RSRP RSRP-Range}.
```

2) MeasIdleConfig: the MeasIdleConfig configures the measurement of the terminal device in the radio resource control_IDLE (RRC_IDLE) or RRC_INACTIVE state; and the MeasIdleConfig includes the configuration of the quality Threshold for indicating the quality threshold that indicates quality reporting of a measured cell in the RRC_IDLE state or RRC_INACTIVE state.

The quality threshold can be a quality threshold for the RSRP or a quality threshold for the RSRQ. A configuration of the MeasIdleConfig may be as follows:

```
MeasIdleCarrierNR - r 16::=
  qualityThreshold-r16 SEQUENCE {
  idleRSRP-Threshold-NR-r16 RSRP-Range OPTIONAL,--Need R
  IdleRSRQ-Threshold-NR-r16 RSRQ-Range OPTIONAL-Need R.
```

3) A measurement object (represented as MeasObjectNR): the MeasObjectNR configures the measurement object and indicating the information associated with the intra-frequency measurement and inter-frequency measurement by using a synchronization signal block (SSB)/physical broadcast channel (PBCH) block and a channel-state information reference signal (CSI-RS). The MeasObjectNR may include absThreshCSI-RS-Consolidation and absThreshSS-BlocksConsolidation. The absThreshCSI-RS-Consolidation and absThreshSS-BlocksConsolidation indicate the thresholds that need to be satisfied by measurement qualities of the beams that can be consolidated and the absThreshCSI-RS-Consolidation and absThreshSS-BlocksConsolidation respectively indicates a measurement quality threshold based on the CSI-RS and a measurement quality threshold based on the SSB. The MeasObjectNR may also include nrofCSInrofCSI-RS-ResourcesToAverage and nrofSS-BlocksToAverage. The nrofCSInrofCSI-RS-ResourcesToAverage and nrofSS-BlocksToAverage are a CSI-RS-based measurement result and an SSB-based measurement result, respectively, and both indicate the maximum number of the measurement results for averaging each of beams. The offsetMO indicates an offset of a measurement result of the measurement object for a neighboring cell. A configuration of the MeasObjectNR may be as follows:

```
absThreshSS-BlocksConsolidation ThresholdNR OPTIONAL,--Need R
   absThreshCSI-RS-Consolidation ThresholdNR OPTIONAL,--Need R
  nrofSS-BlocksToAverage INTEGER (2..maxNrofSS-BlocksToAverage) OPTIONAL,-
  -Need R
  nrofCSI-RS-ResourcesToAverage INTEGER (2..maxnrofCSI-RS-
  ResourcesToAverage) OPTIONAL,--
  offsetMO Q-OffsetRangeList,
   Q-OffsetRangeList ::= SEQUENCE {
  rsrpOffsetSSB Q-OffsetRange DEFAULT dB0,
  rsrqOffsetSSB Q-OffsetRange DEFAULT dB0,
   sinrOffsetSSB Q-OffsetRange DEFAULT dB0,
  rsrpOffsetCSI-RS Q-OffsetRange DEFAULT dB0,
  rsrqOffsetCSI-RS Q-OffsetRange DEFAULT dB0,
   sinrOffsetCSI-RS Q-OffsetRange DEFAULT dB0
  ThresholdNR ::= SEQUENCE {
  thresholdRSRP RSRP-Range OPTIONAL, -- Need R
  thresholdRSRQ RSRQ-Range OPTIONAL, -- Need R
  thresholdSINR SINR-Range.
```

4) A measurement report configuration (represented as ReportConfigNR): the ReportConfigNR indicates rules for triggering a NR measurement report event, and the ReportConfigNR includes thresholds for triggering the measurement report event, including an SSB-based or CSI-RS-based RSRP threshold, an SSB-based or CSI-RS-based RSRQ threshold, and an SSB-based or CSI-RS-based SINR threshold. A configuration of the ReportConfigNR can be as follows:

```
MeasTriggerQuantity ::= CHOICE {
  rsrp RSRP-Range,
  rsrq RSRQ-Range,
   sinr SINR-Range.
```

5) A beam failure recovery configuration (represented as BeamFailureRecoveryConfig): the BeamFailureRecoveryConfig configures the RSRP threshold to be satisfied by candidate beams determined for beam failure recovery when a beam failure occurs during beam management. A configuration of the BeamFailureRecoveryConfig may be as follows:
rsrp-ThresholdSSB RSRP-Range.

6) A beam failure recovery secondary cell configuration (represented as BeamFailureRecoverySCellConfig): the BeamFailureRecoverySCellConfig configures the RSRP threshold to be satisfied by the candidate beams determined for beam failure recovery when the beam failure occurs in the SCell during the beam management process.

A configuration of the BeamFailureRecoverySCellConfig may be as follows:

```
  BeamFailureRecoverySCellConfig-r16:: = SEQUENCE {
  rsrp-ThresholdBFR-r16 RSRP-Range.
```

For the RedCap terminal device, due to a decrease in the number of the receiving antennas or a decrease in the antenna gain required by the RedCap terminal device, the measurement results of the RedCap terminal device for SSB or CSI-RS will decrease compared with ordinary terminal device (a non-RedCap terminal device or a traditional terminal device). Therefore, when performing the measurement report and the beam management through the measurement result, if a RedCap terminal device shares the same measurement threshold with a non-RedCap terminal device, it will not be possible to perform the corresponding measurement optimization for the RedCap terminal device, which will result in the failure of the correct execution of the processes associated with the measurement of the RedCap terminal device, as well as the degradation of the performance of triggering the measurement report events associated with the RedCap terminal device and the performance of beam management.

The technical proposal provided by the embodiments of the disclosure can be applied to various communication systems, such as, a global system of mobile communication (GSM) system, a code division multiple access (CDMA) system, a wideband code division multiple access (WCDMA) system, a general packet radio service (GPRS), an LTE system, an LTE frequency division duplex (FDD) system, an LTE time division duplex (TDD) system, an advanced long term evolution (LTE-A) system, an NR system, an evolution system of an NR system, an LTE-based access to unlicensed spectrum, LTE-U) system, an NR-based access to unlicensed spectrum (NR-U) system, an universal mobile telecommunications system (UMTS), a world interoperability for microwave access (WiMAX) communication system, a wireless local area network (WLAN), a wireless fidelity (WiFi), a next generation communication system or other communication systems.

System architectures and service scenarios described in the embodiments of the disclosure are intended to more clearly explain the technical solutions provided by the embodiments of the disclosure, and do not constitute a limitation to the technical solutions provided by the embodiments of the disclosure. Those skilled in the art may know that the technical solutions provided by the embodiments of the disclosure are equally applicable to similar technical problems with the evolution of the network architecture and the emergence of new service scenarios.

The network device involved in the embodiments of the present disclosure may be a common base station (e.g., a NodeB, eNB or gNB), a new radio controller (NR controller), a centralized unit, a new radio base station, a radio remote module, a micro base station, a relay, a distributed unit, a transmission reception point (TRP), a transmission point (TP) or any other devices. The embodiments of the present disclosure do not limit the specific technology and the specific device form adopted by the network device. For convenience of description, in all embodiments of the present disclosure, the above-mentioned devices configured to provide a wireless communication function for a terminal device are collectively referred to as a network device.

In the embodiments of the present disclosure, the terminal device may be any terminal. For example, the terminal device may be user equipment for machine type communication. That is, the terminal device may also be referred to as an UE, a mobile station (MS), a mobile terminal, a terminal, etc. The terminal device may communicate with one or more core networks via a radio access network (RAN). For example, the terminal device may be a mobile telephone (or "cellular" telephone), a computer with a mobile terminal, etc. For example, the terminal device may also be a portable mobile device, a pocket-sized mobile device, a hand-held mobile device, a computer-built mobile device or a vehicle-mounted mobile device that exchanges language and/or data with the radio access network. No specific limitations are made in the embodiments of the present disclosure.

Optionally, the network device and the terminal device can be deployed on land including indoor or outdoor environments, hand-held or vehicle-mounted configurations; deployed on the water surface; or deployed on airplanes, balloons and artificial satellites in the air. Embodiments of the present disclosure do not limit application scenarios of the network device and the terminal device.

Optionally, communications between a network device and a terminal device and between terminal devices may be performed through a licensed spectrum, an unlicensed spectrum, or both the licensed spectrum and the unlicensed spectrum. Communications between a network device and a terminal device and between terminal devices can be performed over frequency spectra below 7 gigahertz (GHz) or above 7GHz, or both frequency spectra below 7GHz and frequency spectra above 7GHz. The frequency spectrum resources used between the network device and the terminal device are not limited in the embodiments of the present disclosure.

In general, the number of connections supported by traditional communication systems is limited and easy to implement. However, with the development of communication technology, mobile communication systems will support not only traditional communication, but also, for example, device to device (D2D) communication, machine to machine (M2M) communication, machine type communication (MTC), vehicle to vehicle (V2V) communication, etc. Embodiments of the present disclosure may also be applied to these communication systems.

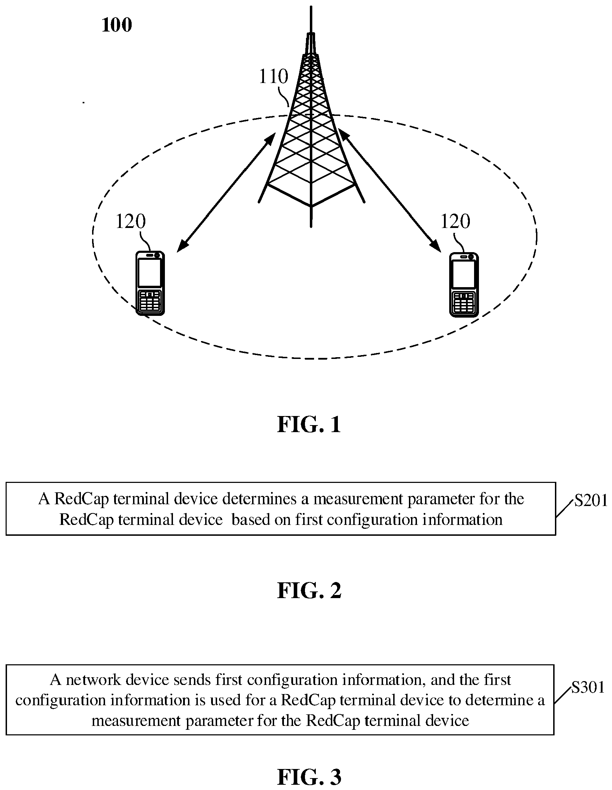

Exemplarily, a communication system 100 applied in embodiments of the present disclosure is shown in FIG. 1. The communication system 100 may include a network device 110. The network device 110 may be a device that communicates with a terminal device 120 (which is also referred to as a communication terminal or a terminal). The network device 110 may provide communication coverage for a particular geographic area and may communicate with terminal devices located within the coverage. Optionally, the network device 110 may be a base transceiver station (BTS) in a GSM system or a CDMA system, a base station (NodeB, or NB) in a WCDMA system, an evolutional base station (Evolutional Node B, eNB or eNodeB) in an LTE system, or a wireless controller in a cloud radio access network (CRAN). Optionally, the network device may be a mobile switching center, a relay station, a access point, a vehicle-mounted device, a wearable device, a hub, a switch, a bridge, a router, a network-side device in a 5G network, or a network device in a future evolved public land mobile network (PLMN).

The communication system 100 also includes at least one terminal device 120 located within the coverage of the network device 110. The "terminal device" used herein includes, but is not limited to, an apparatus which may be connected via a wired line, such as a public switched telephone network (PSTN) and a digital subscriber lines (DSL), a digital cable, or a direct cable connection; and/or another data connection/network; and/or via a wireless interface, such as a cellular network, a wireless local area network (WLAN), a digital TV network such as a DVB-H (digital video broadcasting handheld) network, a satellite network, or an AM-FM broadcast transmitter; and/or a device of another terminal device configured to receive/send communication signals; and/or internet of things (IoT) device. A terminal device configured to communicate via a wireless interface may be referred to as a "wireless communication terminal", a "wireless terminal" or a "mobile terminal". Examples of mobile terminals include, but are not limited to, satellites or cellular phones; personal communications system (PCS) terminals that may combine a cellular radiotelephony with data processing, fax, and data communication capabilities; PDAs that may include radiophones, pagers, Internet/Intranet access, web browsers, notebooks, calendars, and/or global positioning system (GPS) receivers; and conventional laptop and/or handheld receivers or other electronic devices including radiophone transceivers. The terminal device may refer to an access terminal, user equipment (UE), a user unit, a user station, a mobile station, a mobile site, a remote station, a remote terminal, a mobile device, a user terminal, a terminal, a wireless communication device, a user agent or a user device. The access terminal can be a cellular telephone, a cordless telephone, a session initiation protocol (SIP) telephone, a wireless local loop (WLL) station, a personal digital assistant (PDA), a handheld device with wireless communication function, a computing device or another processing device connected to a wireless modem, an vehicle-mounted device, a wearable device, a terminal in 5G network or a terminal device in a future evolved PLMN, etc.

Optionally, device-to-device (D2D) communication may be performed between terminal devices 120.

Optionally, a 5G system or 5G network may also be referred to as an NR system or NR network.

FIG. 1 exemplarily illustrates one network device and two terminal devices. Optionally, the communication system 100 may include multiple network devices, and other numbers of terminal devices may be included within the coverage of each network device, which is not limited by embodiments of the present disclosure.

Optionally, the communication system 100 may also include other network entity, such as a network controller, a mobility management entity or the like, which is not limited in the embodiments of the present disclosure.

It should be understood that a device having a communication function in a network or system in the embodiments of the present disclosure may be referred to as a communication device. Taking the communication system 100 shown in FIG. 1 as an example, the communication device may include a network device 110 and a terminal device 120 that both have the communication function, and the network device 110 and the terminal device 120 may be specific devices as described above, which will not be described again herein. The communication device may also include other devices in the communication system 100, such as a network controller, a mobility management entity and other network entities, which are not limited in the embodiments of the present disclosure.

An optional processing flow of the method for determining a measurement parameter according to an embodiment of the present disclosure, as shown in FIG. 2, may at least include operation S201.

In operation S201, the RedCap terminal device determines the measurement parameter for the RedCap terminal device based on first configuration information.

In some embodiments, the first configuration information may be configuration information sent from the network device to the RedCap terminal device. As an example, the network device sends the first configuration information to the RedCap terminal device, and the first configuration information configures a measurement parameter of the RedCap terminal device.

In a scenario where the first configuration information is the configuration information sent from the network device to the RedCap terminal device, the first configuration information may include at least one of 1) to 10).
1) Measurement configuration information for a SpCell of the RedCap terminal device. As an example, the measurement configuration information for the SpCell of the RedCap terminal device may be represented as s-MeasureConfig. Correspondingly, the measurement parameter for the RedCap terminal device may include a parameter for configuring an RSRP threshold of the RedCap terminal device in the SpCell. The RSRP threshold of the RedCap terminal device in the SpCell is used for the RedCap terminal device to perform the measurement of the non-serving cell. As an example, the network device may control the RedCap terminal device to perform the measurement of the non-serving cell based on the RSRP threshold of the RedCap terminal device in the SpCell.

As an example, the network device configures a separate s-MeasureConfig for the RedCap terminal device in the measurement configuration sent to the terminal device, and the s-MeasureConfig is specifically used for the RedCap terminal device to determine whether to perform the measurement of the non-serving cell. A measurement configuration is illustrated as follows, and the newly added s-MeasureConfig-RedCap indication information indicates the measurement parameter of the RedCap terminal device.

```
   s-MeasureConfig-RedCap CHOICE {
   ssb-RSRP RSRP-Range,
  csi-RSRP RSRP-Range}.
```

Since the number of the receiving antennas required by the RedCap terminal device is less than that required by the ordinary terminal device (the non-RedCap terminal device), the measurement result for the reference signal (such as SSB or CSI-RS) of the RedCap terminal device is lower than that of the ordinary terminal device (the non-RedCap terminal device), and the RSRP value obtained by the RedCap terminal device measuring the reference channel is also lower than the RSRP value obtained by the ordinary terminal device (the non-RedCap terminal device) measuring the reference channel. If the RedCap terminal device and the ordinary terminal device (the non-RedCap terminal device) share the same measurement threshold for the ordinary terminal device (the non-RedCap terminal device), the measurement behavior of the RedCap terminal device will be quite different from that of the ordinary terminal device (the non-RedCap terminal device), and the network device cannot optimize the measurement of the RedCap terminal device. According to the embodiments of the present disclosure, by configuring the RedCap terminal device with a measurement threshold that is specific to the RedCap terminal device, the measurement behavior of the RedCap terminal device can be optimized.

2) Idle state measurement configuration information for the RedCap terminal device. As an example, the idle state measurement configuration information for the RedCap terminal device may be represented as MeasIdleConfig. Correspondingly, the measurement parameter for the RedCap terminal device may include a quality threshold for indicating quality reporting of a measured cell by the RedCap terminal device in an idle state and/or an inactive state.

In some embodiments, the quality threshold may include a quality threshold for the RSRP, and/or, a quality threshold for the RSRQ.

As an example, the network device configures a separate MeasIdleConfig for the RedCap terminal device in the measurement configuration sent to the terminal device, and the MeasIdleConfig is specifically used for the RedCap terminal device to report the quality of the measured cell in the idle state and/or the inactive state. A measurement configuration is shown as follows, the newly added qualityThreshold-RedCap indication information indicates the quality threshold for indicating the quality reporting of the measured cell by the RedCap terminal device in an idle state and/or an inactive state, and the quality threshold may include an RSRP threshold and an RSRQ threshold.

```
  qualityThreshold-RedCap SEQUENCE {
  idleRSRP-Threshold-NR-r17 RSRP-Range OPTIONAL,--Need R
  IdleRSRQ-Threshold-NR-r17 RSRQ-Range OPTIONAL-Need R.
```

Since the number of the receiving antennas required by the RedCap terminal device is less than that required by the ordinary terminal device (the non-RedCap terminal device), the cell quality measured by the RedCap terminal device is lower than that measured by the ordinary terminal device (the non-RedCap terminal device). According to the embodiments of the present disclosure, by configuring the RedCap terminal device with the specific quality threshold of the quality reporting of the measured cell by the RedCap terminal device in an idle state and/or an inactive state, the quality reporting of the measured cell of the RedCap terminal device can be controlled.

3) Measurement object configuration information for the RedCap terminal device. As an example, the measurement object configuration information for the RedCap terminal device may be represented as MeasObjectNR. Correspondingly, the parameters for the measurement configuration of the RedCap terminal device include at least one of the following items a to e.
a. A beam measurement quality threshold for beam consolidation based on CSI-RS measurement results by the RedCap terminal device. The beam measurement quality threshold for the beam consolidation based on the CSI-RS measurement results by the RedCap terminal device may be represented as absThreshCSI-RS-Consolidation. For example, the RedCap terminal device may perform beam consolidation if a CSI-RS measurement result measured by the RedCap terminal device is greater than the configured quality threshold.
b. A beam measurement quality threshold for beam consolidation based on SSB measurement results by the RedCap terminal device. The beam measurement quality threshold for the beam consolidation based on the SSB measurement results by the RedCap terminal device may be represented as absThreshSS-BlocksConsolidation. For example, the RedCap terminal device may perform beam consolidation if an SSB measurement result measured by the RedCap terminal device is greater than the configured quality threshold.
c. A maximum number of CSI-RS measurement results which are to be averaged for each of beams by the RedCap terminal device. The maximum number can be represented as nrofCSInrofCSI-RS-ResourcesToAverage. For example, the RedCap terminal device averages the signals in the beam if a CSI-RS measurement result measured by the RedCap terminal device is greater than the maximum number.
d. A maximum number of SSB measurement results which are to be averaged for each of beams by the RedCap terminal device. The maximum number may be represented as nrofSS-BlocksToAverage. For example, the RedCap terminal device averages the signals in the beam if an SSB measurement result measured by the RedCap terminal device is greater than the maximum number.
e. An offset of a measurement result for a neighboring cell, used by the RedCap terminal device. The offset may be represented as offsetMO.

4) Measurement report configuration information for the RedCap terminal device. As an example, the measurement report configuration information for the RedCap terminal device may be represented as ReportConfigNR. Correspondingly, the measurement parameter for the RedCap terminal device includes a threshold for triggering a measurement report event of the RedCap terminal device. As an example, the threshold for triggering the measurement report event of the RedCap terminal device may include at least one of: a CSI-RS-based RSRP threshold, a CSI-RS-based RSRQ threshold, a CSI-RS-based SINR threshold, an SSB-based RSRP threshold, an SSB-based RSRQ threshold, or an SSB-based SINR threshold.

For example, the CSI-RS-based RSRP threshold may be a CSI-RS-based RSRP threshold used in an operation that the RedCap terminal device reports the measurement report to the network device if an RSRP value measured based on the CSI-RS by the RedCap terminal device is greater than the CSI-RS-based RSRP threshold. The CSI-RS-based RSRQ threshold may be a CSI-RS-based RSRQ threshold used in an operation that the RedCap terminal device reports the measurement report to the network device if an RSRQ value measured based on CSI-RS by the RedCap terminal device is greater than the CSI-RS-based RSRQ threshold. The CSI-RS-based SINR threshold may be a CSI-RS-based SINR threshold used in an operation that the RedCap terminal device reports the measurement report to the network device if an SINR value measured based on the CSI-RS by the RedCap terminal device is greater than the CSI-RS-based SINR threshold. The SSB-based RSRP threshold may be an SSB-based RSRP threshold used in an operation that the RedCap terminal device reports the measurement report to the network device if an RSRP value measured based on the SSB by the RedCap terminal device is greater than the SSB-based RSRP threshold. The SSB-based RSRQ threshold may be an SSB-based RSRQ threshold used in an operation that the RedCap terminal device reports the measurement report to the network device if an RSRQ value measured based on the SSB by the RedCap terminal device is greater than the SSB-based RSRQ threshold. The SSB-based SINR threshold may be an SSB-based SINR threshold used in an operation that the RedCap terminal device reports the measurement report to the network device if an SINR value measured based on the SSB by the RedCap terminal device is greater than the SSB-based SINR threshold.

As an example, a measurement configuration is as follows:

```
  MeasTriggerQuantity-RedCap :: = CHOICE {
  rsrp RSRP-Range,
  rsrq RSRQ-Range,
   sinr SINR-Range.
```

5) Beam failure recovery configuration information or beam failure recovery secondary cell configuration information for the RedCap terminal device. As an example, the beam failure recovery configuration information for the RedCap terminal device may be represented as BeamFailureRecoveryConfig, and the beam failure recovery secondary cell configuration information for the RedCap terminal device may be represented as BeamFailureRecoverySCellConfig. Correspondingly, the measurement parameters for the RedCap terminal device include: a beam quality threshold for the beam failure recovery of the RedCap terminal device.

In some embodiments, as for the beam failure recovery configuration information of the RedCap terminal device, the beam quality threshold may be an SSB-based RSRP threshold. For example, if the first configuration information is the BeamFailureRecoveryConfig and the RSRP measured based on the SSB by the RedCap terminal device is greater than the SSB-based RSRP threshold, then the RedCap terminal device performs beam failure recovery.

In other embodiments, as for the beam failure recovery secondary cell configuration information of the RedCap terminal device, the beam quality threshold may be an SSB-based RSRP threshold and/or a CSI-RS-based RSRP threshold. For example, if the first configuration information is the BeamFailureRecoverySCellConfig and the RSRP measured based on SSB by the RedCap terminal device is greater than the SSB-based RSRP threshold, then the RedCap terminal device performs beam failure recovery. Optionally, if the RSRP measured based on CSI-RS by the RedCap terminal device is greater than the CSI-RS-based RSRP threshold, the RedCap terminal device performs the beam failure recovery.

As an example, a measurement configuration is rsrp-ThresholdSSB-RedCap RSRP-Range.

As an example, another measurement configuration is rsrp-ThresholdBFR-r16-RedCap RSRP-Range.

The forgoing is a description that the network device sends the first configuration information specifically for the RedCap terminal device to enable the RedCap terminal device to perform the cell measurement. In this way, the problems of the RedCap terminal device being unable to perform the measurement process correctly, or the measurement report time trigger performance decreasing, or the beam management performance decreasing due to the RedCap terminal device and non-RedCap terminal device (i.e., the common terminal device) sharing the measurement parameter configured by the network device for the non-RedCap terminal device (i.e., the common terminal device) are avoided.

The following is a description that the first configuration information from the network device is configuration information for the non-RedCap terminal device (i.e., common terminal device), and the RedCap terminal device determines the measurement parameter for the RedCap terminal device based on the first configuration information (the measurement parameter of the first terminal device).

In some embodiments, the first configuration information may be configuration information sent from a network device to a first terminal device. The first terminal device and the RedCap terminal device support different capabilities. For example, the RedCap terminal device has the characteristics of low complexity, low cost and low capability compared with the first terminal device. As an example, the first terminal device may be a common terminal device or a conventional terminal device, such as, a common terminal device in the NR system.

In some embodiments, the first configuration information may include at least one of the following configuration information sent from the network device to the first terminal device.

6) SpCell measurement configuration information for the first terminal device. As an example, the SpCell measurement configuration information for the first terminal device may be represented as s-MeasureConfig. Correspondingly, the measurement parameter for the first terminal device may include a parameter for configuring an RSRP threshold of the first terminal device in a special cell, and the RSRP threshold of the first terminal device in the special cell is used for the first terminal device to perform the measurement for the non-serving cell. As an example, the network device may control the first terminal device to perform the measurement for the non-serving cell based on the RSRP threshold of the first terminal device in the special cell.

7) Idle state measurement configuration information for the first terminal device. As an example, the idle state measurement configuration information for the first terminal device may be represented as MeasIdleConfig. Correspondingly, the measurement parameter for the first terminal device may include a quality threshold for indicating a quality reporting of a measured cell by the RedCap terminal device in an idle state and/or an inactive state.

In some embodiments, the quality threshold may include a quality threshold for the RSRP and/or a quality threshold for the RSRQ.

8) Measurement object configuration information for the first terminal device. As an example, the measurement object configuration information for the first terminal device may be represented as MeasObjectNR. Correspondingly, the parameter of the measurement configuration for the first terminal device includes at least one of the following items f to j.

f. A beam measurement quality threshold for beam consolidation by the first terminal device based on CSI-RS measurement results. The beam measurement quality threshold for the beam consolidation by the first terminal device based on CSI-RS measurement results may be represented as absThreshCSI-RS-Consolidation. For example, the first terminal device may perform the beam consolidation if a CSI-RS measurement result measured by the first terminal device is greater than the configured quality threshold.

g. A beam measurement quality threshold for beam consolidation by the first terminal device based on SSB measurement results. The beam measurement quality threshold for the beam consolidation by the first terminal device based on SSB measurement results may be represented as absThreshSS-BlocksConsolidation. For example, the first terminal device may perform the beam consolidation if an SSB measurement result measured by the first terminal device is greater than the configured quality threshold.

h. A maximum number of CSI-RS measurement results which are to be averaged for each of beams by the RedCap terminal device. The maximum number can be represented as nrofCSInrofCSI-RS-ResourcesToAverage. For example, the first terminal device averages the signals in the beam if a CSI-RS measurement result measured by the first terminal device is greater than the maximum number.

i. A maximum number of SSB measurement results which are to be averaged for each of beams by the RedCap terminal device. The maximum number can be represented as nrofSS-BlocksToAverage. For example, the first terminal device averages the signals in the beam if an SSB measurement result measured by the first terminal device is greater than the maximum number.

j. An offset of a measurement result for a neighboring cell, used by the first terminal device. The offset may be represented as offsetMO.

9) Measurement report configuration information for the first terminal device. As an example, the measurement report configuration information for the first terminal device may be represented as a ReportConfigNR. Correspondingly, the measurement parameter for the first terminal device includes a threshold for triggering a measurement report event of the first terminal device. As an example, the threshold for triggering the measurement report event of the first terminal device may include at least one of: a CSI-RS-based RSRP threshold, a CSI-RS-based RSRQ threshold, a CSI-RS-based SINR threshold, an SSB-based RSRP threshold, an SSB-based RSRQ threshold, and an SSB-based SINR threshold.

10) Beam failure recovery configuration information or beam failure recovery secondary cell configuration information for the first terminal device. As an example, the beam failure recovery configuration information for the first terminal device may be represented as BeamFailureRecoveryConfig, and the beam failure recovery secondary cell configuration information for the first terminal device may be represented as BeamFailureRecoverySCellConfig. Correspondingly, the measurement parameter for the first terminal device includes the beam quality threshold for the beam failure recovery of the first terminal device.

In some embodiments, the beam quality threshold may be an SSB-based RSRP threshold for the beam failure recovery configuration information of the first terminal device. For example, if the first configuration information is the BeamFailureRecoveryConfig and the RSRP measured by the first terminal device based on the SSB is greater than the SSB-based RSRP threshold, then the first terminal device performs the beam failure recovery.

In other embodiments, as for the beam failure recovery secondary cell configuration information of the first terminal device, the beam quality threshold may be an SSB-based RSRP threshold and/or a CSI-RS-based RSRP threshold. For example, if the first configuration information is the BeamFailureRecoverySCellConfig and the RSRP measured by the first terminal device based on SSB is greater than the SSB-based RSRP threshold, the first terminal device performs beam failure recovery. Optionally, the RSRP measured by the first terminal device based on the CSI-RS is greater than the CSI-RS-based RSRP threshold, the first terminal device performs the beam failure recovery.

In some embodiments, the measurement parameter of the RedCap terminal device is determined based on a predefined rule. As an example, the predefined rule is associated with at least one of: a type of the RedCap terminal device, the number of receiving antennas, or receiving antenna gain.

In some embodiments, the measurement parameter of the RedCap terminal device is associated with at least one of: a type of the RedCap terminal device, a level of the receiving antenna gain of the RedCap terminal device, and the number of receiving antennas of the RedCap terminal device.

In some embodiments, the type of the RedCap terminal device is associated with at least one of the following parameters: the level of the receiving antenna gain of the RedCap terminal device and the number of receiving antennas of the RedCap terminal device. As an example, a RedCap terminal device having a number of receiving antennas of 1 is a first type of RedCap terminal device, and a RedCap terminal device having a number of receiving antennas of 2 is a second type of RedCap terminal device.

In some embodiments, a value of the measurement parameter of the RedCap terminal device is a value obtained by subtracting a first value from a value of the measurement parameter of the first terminal device. The first value may be predefined or protocol-agreed.

As an example, for a frequency band where the minimum number of receiving antennas is supported in the NR system is 4 or 2, the minimum number of receiving antennas supported by the RedCap terminal device is 1, then the RedCap terminal device obtains an RSRP threshold value for the RedCap terminal device by subtracting 6dBm or 3dBm from the measurement threshold for the non-RedCap terminal device configured in the existing first configuration information.

Taking the measurement threshold having a value of RSRP as an example, RSRP-Range has a value in the range of 0-127, and the actual RSRP threshold is obtained by subtracting 156dBm from the RSRP-Range. The actual RSRP threshold is infinity, except for a case where the value of the RSRP-Range is 127. The values of the RSRP-Range correspond to a range of the measured RSRP, as shown in Table 1 below.

**Table 1. SS-RSRP and CSI-RSRP measurement report mapping table**

| Reported value | Measured quality value (L3 SS-RSRP) | Measured quality value (L1 SS-RSRP and CSI-RSRP) | Unit |
|---|---|---|---|
| RSRP_0 | SS-RSRP<-156 | Not valid | dBm |
| RSRP_1 | -156≤SS-RSRP<-155 | Not valid | dBm |
| RSRP_2 | -155 ≤SS-RSRP<-154 | Not valid | dBm |
| RSRP_3 | -154≤SS-RSRP<-153 | Not valid | dBm |
| RSRP_4 | -153≤SS-RSRP<-152 | Not valid | dBm |
| RSRP_5 | -152≤SS-RSRP<-151 | Not valid | dBm |
| RSRP_6 | -151≤SS-RSRP<-150 | Not valid | dBm |
| RSRP_7 | -150≤SS-RSRP<-149 | Not valid | dBm |
| RSRP_8 | -149≤SS-RSRP<-148 | Not valid | dBm |
| RSRP_9 | -148≤SS-RSRP<-147 | Not valid | dBm |
| RSRP_10 | -147≤SS-RSRP<-146 | Not valid | dBm |
| RSRP_11 | -146≤SS-RSRP<-145 | Not valid | dBm |
| RSRP_12 | -145≤SS-RSRP<-144 | Not valid | dBm |
| RSRP_13 | -144≤SS-RSRP<-143 | Not valid | dBm |
| RSRP_14 | -143≤SS-RSRP<-142 | Not valid | dBm |
| RSRP_15 | -142≤SS-RSRP<-141 | Not valid | dBm |
| RSRP_16 | -141≤SS-RSRP<-140 | RSRP<-140 | dBm |
| RSRP_17 | -140≤SS-RSRP<-139 | -140≤RSRP<-139 | dBm |
| RSRP_18 | -139≤SS-RSRP<-138 | -139≤RSRP<-138 | dBm |
| ... | ... | ... | ... |
| RSRP_111 | -46≤SS-RSRP<-45 | -46≤RSRP<-45 | dBm |
| RSRP_112 | -45≤SS-RSRP<-44 | -45≤RSRP<-44 | dBm |
| RSRP_113 | -44≤SS-RSRP<-43 | -44≤RSRP | dBm |
| RSRP_114 | -43≤SS-RSRP<-42 | Not valid | dBm |
| RSRP_115 | -42≤SS-RSRP<-41 | Not valid | dBm |
| RSRP_116 | -41≤SS-RSRP<-40 | Not valid | dBm |
| RSRP_117 | -40≤SS-RSRP<-39 | Not valid | dBm |
| RSRP_118 | -39≤SS-RSRP<-38 | Not valid | dBm |
| RSRP_119 | -38≤SS-RSRP<-37 | Not valid | dBm |
| RSRP_120 | -37≤SS-RSRP<-36 | Not valid | dBm |
| RSRP_121 | -36≤SS-RSRP<-35 | Not valid | dBm |
| RSRP_122 | -35≤SS-RSRP<-34 | Not valid | dBm |
| RSRP_123 | -34≤SS-RSRP<-33 | Not valid | dBm |
| RSRP_124 | -33≤SS-RSRP<-32 | Not valid | dBm |
| RSRP_125 | -32≤SS-RSRP<-31 | Not valid | dBm |
| RSRP_126 | -31≤SS-RSRP | Not valid | dBm |
| RSRP_127 (Note) | Infinity | Infinity | dBm |
| Note: The value of RSRP_127 is applicable for RSRP threshold configured by the network as defined in TS 38.331 [2], but not for the purpose of measurement reporting. | | | |

The RedCap terminal device subtracts 156dBm from the value of the existing RSRP-Range, and then further subtracts 6dBm or 3dBm according to the predefined rule to obtain the RSRP threshold for the RedCap terminal device. As an example, the RSRP threshold for the RedCap terminal device is calculated as follows:
(rsrp-ThresholdSSB-156-6) dBm, or (rsrp-ThresholdSSB-156-3) dBm.

For example, if the network device indicates, through the first configuration information, that the RSRP-ThresholdSSB is 10 dBm, then the threshold of the RedCap terminal device is: 10 dBm-3 dBm=7 dBm, and the RSRP threshold of the RedCap terminal device corresponds to an RSRP range of [-150,-149) dBm in the table 1.

In some embodiments, in addition to the number of receiving antennas having an effect on the measurement result, the receiving antenna gain also has an effect on the measurement result.

As an example, the RSRP threshold for the RedCap terminal device can also be calculated as follows:
(rsrp-ThresholdSSB-156-6-3) dBm, or (rsrp-ThresholdSSB-156-3-3) dBm.

For example, if the network device indicates, through the first configuration information, that the RSRP-ThresholdSSB is 10 dBm, then the threshold of the RedCap terminal device is: 10 dBm-3 dBm-3 dBm=4 dBm; and the RSRP threshold of the RedCap terminal device corresponds to an RSRP range of [-153,-152) dBm in the table 1.

In the embodiments of the present disclosure, only the influences of the number of receiving antennas and the receiving antenna gain on the RSRP threshold being 3 dBm and 6 dBm is taken as an example. In the specific implementation, the influences of the number of receiving antennas and the receiving antenna gain on the RSRP threshold can also be other values, which is not limited in the embodiments of the present disclosure.

In some embodiments, the RedCap terminal device may determine measurement parameter corresponding to the type of the RedCap terminal device based on the first configuration information. As an example, the RedCap terminal devices may be classified into different types based on the number of receiving antennas and/or the level of the receiving antenna gain. The level of the receiving antenna gain may include different receiving antenna gain reduction values.

As an example, the RedCap terminal device may determine measurement parameter for each type of the RedCap terminal device based on the first configuration information. For example, a RedCap terminal device having a number of receiving antennas of 1 is a first type of the RedCap terminal device, and a RedCap terminal device having a number of receiving antennas of 2 is a second type of the RedCap terminal device. If the measurement parameter configured in the first configuration information is A, then the measurement parameter of the second type of the RedCap terminal device is A-X dBm, and the measurement parameter of the first type of the RedCap terminal device is A-2X dBm, where X is a positive integer. For another example, if the receiving antenna gain reduction value is 1 dBm, then the level of the receiving antenna gain is 1, and the RedCap terminal device is a second type of the RedCap terminal device. If the receiving antenna gain reduction value is 2 dBm, then the level of the receiving antenna gain is 2, and the RedCap terminal device is the first type of the RedCap terminal device. If the measurement parameter configured in the first configuration information is A, then the measurement parameter of the second type of the RedCap terminal device is A-Y dBm, and the measurement parameter of the first type of the RedCap terminal device is A-2Y dBm, where Y is a positive integer.

As an example, the RedCap terminal device may determine the measurement parameter of one type of the RedCap terminal device based on the first configuration information, and the RedCap terminal device may determine measurement parameters of other types of the RedCap terminal devices based on the measurement parameter of the one type of the RedCap terminal device. For example, a RedCap terminal device having a number of receiving antennas of 1 is the first type of the RedCap terminal device, and a RedCap terminal device having a number of receiving antennas of 2 is the second type of the RedCap terminal device. If the measurement parameter configured in the first configuration information is A, then the measurement parameter of the second type of the RedCap terminal device can be determined as A-X dBm based on the first configuration information. Based on the measurement parameter of the second type of the RedCap terminal device, the measurement parameter of the first type of the RedCap terminal device can be determined as A-2X dBm, where X is a positive integer. For another example, if the receiving antenna gain reduction value is 1 dBm, then the level of the receiving antenna gain is 1, and the RedCap terminal device is the second type of the RedCap terminal device. If the receiving antenna gain reduction value is 2 dBm, then the level of the receiving antenna is 2, and the RedCap terminal device is the first type of the RedCap terminal device. If the measurement parameter configured in the first configuration information is A, then the measurement parameter of the second type of RedCap terminal device can be determined as A-Y dBm based on the first configuration information, and the measurement parameter of the first type of the RedCap terminal device may be determined as A-2Y dBm based on the measurement parameter of the second type of the RedCap terminal device, where Y is a positive integer.

In summary, the RedCap terminal device directly determines the measurement parameter of each type of the RedCap terminal device based on the first configuration information. Optionally, the RedCap terminal device directly determines the measurement parameter of one type of the RedCap terminal device based on the first configuration information, and then determines the measurement parameters of other types of the RedCap terminal devices based on the measurement parameter of the one type of the RedCap terminal device. Optionally, the RedCap terminal device determines measurement parameters of the RedCap terminal devices having different numbers of receiving antennas and/or levels of the receiving antenna gain based on the first configuration information.

In the embodiments of the present disclosure, different RedCap terminal devices have different measurement parameters according to their own types or receiving capabilities (i.e., the number of receiving antennas and/or the levels of the receiving antenna gain), which realizes flexible configuration of the measurement parameter of RedCap terminal device. In addition, the measurement parameter of the RedCap terminal device can be determined through the measurement parameter configured by the network device for the common terminal device (i.e., the non-RedCap terminal device), which can reduce the signaling overhead and maintain good backward compatibility.

As illustrated in FIG. 3, another optional process flow of the method for determining a measurement parameter according to an embodiment of the present disclosure may at least include operation S301.

In the operation S301, the network device sends first configuration information, and the first configuration information is used for a RedCap terminal device to determine the measurement parameter for the RedCap terminal device.

In some embodiments, the description made for the first configuration information and the description made for the operation of the RedCap terminal device determining the measurement parameter for the RedCap terminal device are the same as the descriptions made for the operation S201, which is not repeated herein.

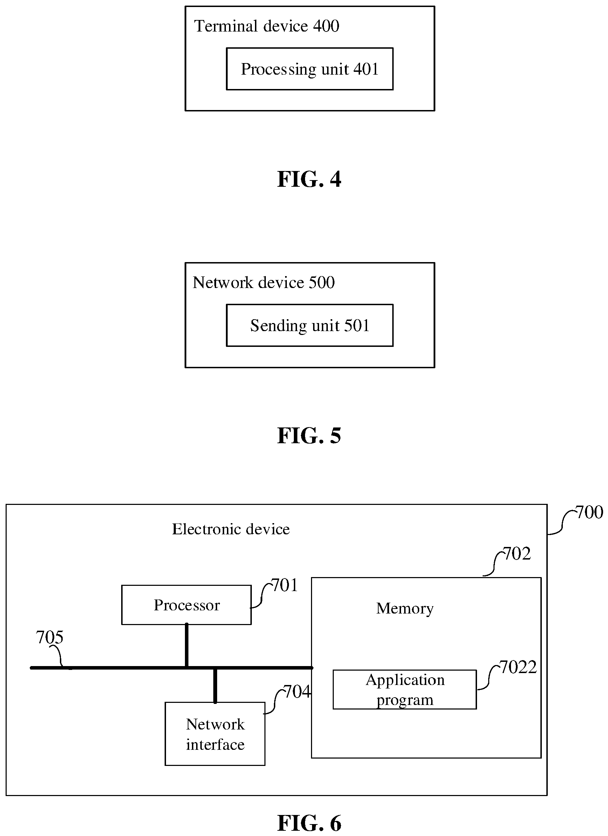

In order to implement the method for determining a measurement parameter according to an embodiment of the present disclosure, the embodiment of the present disclosure also provides a terminal device. The terminal device is a RedCap terminal device, and the optional composition structure of the terminal device 400, as illustrated in FIG. 4, includes a processing unit 401.

The processing unit 401 is configured to determine a measurement parameter for the RedCap terminal device based on first configuration information.

In some embodiments, the measurement parameter for the RedCap terminal device includes a parameter for configuring an RSRP threshold for the RedCap terminal device in a SpCell.

In some embodiments, the measurement parameter for the RedCap terminal device include a parameter for a measurement for a non-serving cell by the RedCap terminal device.

In some embodiments, the first configuration information includes SpCell measurement configuration information for the RedCap terminal device.

In some embodiments, the measurement parameter for the RedCap terminal device include a quality threshold for indicating a quality report of a measured cell by the RedCap terminal device in an idle state and/or an inactive state.

In some embodiments, the quality threshold includes at least one of: a quality threshold for an RSRP, or a quality threshold for an RSRQ.

In some embodiments, the first configuration information includes idle state measurement configuration information for the RedCap terminal device.

In some embodiments, the measurement parameter for the RedCap terminal device includes a parameter for a measurement configuration of the RedCap terminal device.

In some embodiments, the parameter for the measurement configuration of the RedCap terminal device include at least one of:
- a beam measurement quality threshold for beam consolidation based on CSI-RS measurement results by the RedCap terminal device;
- a beam measurement quality threshold for beam consolidation based on SSB measurement results by the RedCap terminal device;
- a maximum number of CSI-RS measurement results which are to be averaged for each of beams by the RedCap terminal device;
- a maximum number of SSB measurement results which are to be averaged for each of beams by the RedCap terminal device; or
- an offset of a measurement result for a neighboring cell, used by the RedCap terminal device.

In some embodiments, the first configuration information includes measurement object configuration information for the RedCap terminal device.

In some embodiments, the measurement parameter for the RedCap terminal device includes a threshold for triggering a measurement report event of the RedCap terminal device.

In some embodiments, the threshold for triggering the measurement report event of the RedCap terminal device includes at least one of: a CSI-RS-based RSRP threshold, a CSI-RS-based RSRQ threshold, a CSI-RS-based SINR threshold, an SSB-based RSRP threshold, an SSB-based RSRQ threshold, or an SSB-based SINR threshold.

In some embodiments, the first configuration information includes measurement report configuration information of the RedCap terminal device.

In some embodiments, the measurement parameter for the RedCap terminal device includes a beam quality threshold for a beam failure recovery of the RedCap terminal device.

In some embodiments, the beam quality threshold for the beam failure recovery of the RedCap terminal device includes an SSB-based RSRP threshold.

In some embodiments, the first configuration information includes beam failure recovery configuration information for the RedCap terminal device.

In some embodiments, the beam quality threshold for the beam failure recovery of the RedCap terminal device includes at least one of: an SSB-based RSRP threshold, or a CSI-RS-based RSRP threshold.

In some embodiments, the first configuration information includes beam failure recovery secondary cell configuration information for the RedCap terminal device.

In some embodiments, the first configuration information includes a measurement parameter for a first terminal device. The first terminal device and the RedCap terminal device support different capabilities.

In some embodiments, the measurement parameter of the RedCap terminal device is determined based on a measurement parameter of the first terminal device.

In some embodiments, the measurement parameter of the RedCap terminal device is determined based on a predefined rule.

In some embodiments, the predefined rule is associated with at least one of: a number of receiving antennas, or receiving antenna gain.

In some embodiments, the predefined rule includes that a value of the measurement parameter of the RedCap terminal device is a value obtained by subtracting a first value from the value of the measurement parameter of the first terminal device.

In some embodiments, the measurement parameter of the RedCap terminal device is associated with at least one of the following items:
- a type of the RedCap terminal device;
- a level of receiving antenna gain of the RedCap terminal device; or
- the number of receiving antennas of the RedCap terminal device.

In some embodiments, the type of the RedCap terminal device is associated with at least one of the following parameters:
- the level of the receiving antenna gain of the RedCap terminal device; or
- the number of the receiving antennas of the RedCap terminal device.

In order to implement the method for determining a measurement parameter according to an embodiment of the present disclosure, the embodiment of the present disclosure also provide a network device. The optional composition structure of the network device 500, as shown in FIG. 5, includes a sending unit 501.

The sending unit 501 is configured to send first configuration information. The first configuration information is used for the RedCap terminal device to determine a measurement parameter for the RedCap terminal device.

In some embodiments, the measurement parameter for the RedCap terminal device includes a parameter for configuring an RSRP threshold of the RedCap terminal device in an SpCell.

In some embodiments, the measurement parameter for the RedCap terminal device includes a parameter for a measurement for a non-serving cell by the RedCap terminal device.

In some embodiments, the first configuration information includes SpCell measurement configuration information for the RedCap terminal device.

In some embodiments, the measurement parameter for the RedCap terminal device includes a quality threshold for indicating a quality reporting of a measured cell by the RedCap terminal device in an idle state and/or an inactive state.

In some embodiments, the quality threshold includes a quality threshold for an RSRP, and/or a quality threshold for an RSRQ.

In some embodiments, the first configuration information includes idle state measurement configuration information for the RedCap terminal device.

In some embodiments, the measurement parameter for the RedCap terminal device includes a parameter for a measurement configuration of the RedCap terminal device.

In some embodiments, the parameter for the measurement configuration of the RedCap terminal device includes at least one of:
- a beam measurement quality threshold for beam consolidation based on CSI-RS measurement results by the RedCap terminal device;
- a beam measurement quality threshold for beam consolidation based on SSB measurement results by the RedCap terminal device;
- a maximum number of CSI-RS measurement results which are to be averaged for each of beams by the RedCap terminal device;
- a maximum number of SSB measurement results which are to be averaged for each of beams by the RedCap terminal device; or
- an offset of a measurement result for a neighboring cell, used by the RedCap terminal device.

In some embodiments, the first configuration information includes measurement object configuration information for the RedCap terminal device.

In some embodiments, the measurement parameters for the RedCap terminal device include a threshold for triggering a measurement report event of the RedCap terminal device.

In some embodiments, the threshold for triggering the measurement report event of the RedCap terminal device includes at least one of: a CSI-RS-based RSRP threshold; a CSI-RS-based RSRQ threshold; a CSI-RS-based SINR threshold; an SSB-based RSRP threshold; an SSB-based RSRQ threshold or an SSB-based SINR threshold.

In some embodiments, the first configuration information includes measurement report configuration information for the RedCap terminal device.

In some embodiments, the measurement parameter for the RedCap terminal device includes a beam quality threshold for a beam failure recovery of the RedCap terminal device.

In some embodiments, the beam quality threshold for the beam failure recovery of the RedCap terminal device includes an SSB-based RSRP threshold.

In some embodiments, the first configuration information includes beam failure recovery configuration information for the RedCap terminal device.

In some embodiments, the beam quality threshold for the beam failure recovery of the RedCap terminal device includes an SSB-based RSRP threshold, and/or a CSI-RS-based RSRP threshold.

In some embodiments, the first configuration information includes beam failure recovery SCell configuration information for the RedCap terminal device.

In some embodiments, the first configuration information includes a measurement parameter for a first terminal device, where the first terminal device and the RedCap terminal device support different capabilities.

In some embodiments, the measurement parameter of the RedCap terminal device is determined based on a measurement parameter of the first terminal device.

In some embodiments, the measurement parameter of the RedCap terminal device is determined based on a predefined rule.

In some embodiments, the predefined rule is associated with at least one of: a number of receiving antennas, or receiving antenna gain.

In some embodiments, the predefined rule includes that a value of the measurement parameter of the RedCap terminal device is a value obtained by subtracting a first value from a value of the measurement parameter of the first terminal device.

In some embodiments, the measurement parameter of the RedCap terminal device is associated with at least one of:
- a type of the RedCap terminal device;
- a level of the receiving antenna gain of the RedCap terminal device; or
- a number of receiving antennas of the RedCap terminal device.

In some embodiments, the type of the RedCap terminal device is associated with at least one of:
- the level of the receiving antenna gain of the RedCap terminal device; or
- the number of the receiving antennas of the RedCap terminal device.

It should be noted that in the embodiments of the present disclosure, the functions of the processing unit 401 can be implemented by a processor, and the functions of the sending unit 501 can be implemented by a transmitter or a transceiver.

An embodiment of the disclosure further provides a terminal device, including a processor and a memory storing a computer program capable of running on the processor, where the processor is caused to perform, when executing the computer program, operations of the method for determining the measurement parameter performed by the terminal device.

An embodiment of the disclosure further provides a network device, including a processor and a memory storing a computer program capable of running on the processor, where the processor is caused to perform, when executing the computer program, operations of the method for determining the measurement parameter performed by the network device.

An embodiment of the disclosure further provides a chip including a processor configured to invoking and running a computer program from a memory, to cause a device installed with the chip to perform the method for determining the measurement parameter performed by the terminal device.

An embodiment of the disclosure further provides a chip including a processor configured to invoking and running a computer program from a memory, to cause a device installed with the chip to perform the method for determining the measurement parameter performed by the network device.

An embodiment of the disclosure further provides a storage medium having stored thereon an executable program that, when executed by the processor, causes the processor to perform the method for determining the measurement parameter performed by the terminal device.

An embodiment of the disclosure further provides a storage medium having stored thereon an executable program that, when executed by the processor, causes the processor to perform the method for determining the measurement parameters performed by the network device.

An embodiment of the disclosure further provides a computer program product including computer program instructions that cause a computer to perform the method for determining the measurement parameter performed by the terminal device.

An embodiment of the disclosure further provides a computer program product including computer program instructions that cause a computer to perform the method for determining the measurement parameter performed by the network device.

An embodiment of the disclosure further provides a computer program that causes a computer to perform the method for determining the measurement parameter performed by the terminal device.

An embodiment of the disclosure further provides a computer program that causes a computer to perform the method for determining the measurement parameter performed by the network device.

FIG. 6 is a schematic diagram of a hardware structure of an electronic device (i.e., a terminal device or a network device) according to an embodiment of the present disclosure. The electronic device 700 includes at least one processor 701, a memory 702 and at least one network interface 704. All the components in the electronic device 700 are coupled together by a bus system 705. It can be understood that the bus system 705 is configured to implement connection communication between these components. The bus system 705 includes a power bus, a control bus and a status signal bus in addition to a data bus. However, for clarity of description, the various buses are designated bus system 705 in FIG. 6.

It will be appreciated that the memory 702 may be volatile memory or non-volatile memory, or may include both volatile memory and non-volatile memory. The non-volatile memory may be read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM). The magnetic surface memory may be a magnetic disk memory or a magnetic tape memory. The volatile memory may be random access memory (RAM) which serves as an external cache. By way of illustration, but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), and direct memory bus random access memory (DRRAM). The memory 702 described in the embodiments of the present disclosure is intended to include, but is not limited to, these and any other suitable types of memories.

The memory 702 in the embodiments of the present disclosure is configured to store various types of data to support the operations of the electronic device 700. Examples of such data include any computer program for operating on the electronic device 700, such as an application program 7022. The programs for implementing the method in the embodiments of the present disclosure may be included in the application program 7022.

The methods disclosed in the above embodiments of the present disclosure may be applied to or implemented by the processor 701. The processor 701 may be an integrated circuit chip with signal processing capabilities. During implementation, each operation of the above method embodiments may be completed by an integrated logic circuit of hardware or instructions in the form of software in the processor 701. The processor 701 may be a general-purpose processor, a digital signal processor (DSPS), or other programmable logic devices, discrete gate or transistor logic devices, discrete hardware components, and the like. The processor 701 may implement or perform the various methods, operations and logic block diagrams disclosed in the embodiments of the present disclosure. The general-purpose processor may be a microprocessor or any conventional processor or the like. The operations of the method disclosed in conjunction with the embodiments of the present disclosure may be directly embodied as being performed by a hardware decoding processor, or performed with a combination of hardware and software modules in the decoding processor. The software modules may be located in a storage medium which is located in the memory 702. The processor 701 reads the information in the memory 702 and completes the operations of the forgoing method in combination with hardware thereof.

In an exemplary embodiment, the electronic device 700 may be implemented by one or more application specific integrated circuits (ASICs), DSPs, programmable logic devices (PLDs), complex programmable logic devices (CPLDs), filed-programmable gate array (FPGA), general-purpose processors, controllers, MCUs, MPUs, or other electronic components, to implement the foregoing methods.

The present disclosure is described with reference to flowcharts and/or block diagrams of the methods, devices (systems) and computer program products according to the embodiments of the disclosure. It is to be understood that each of the flows and/or blocks in the flowcharts and/or the block diagrams and combinations of flows and/or blocks in the flowcharts and/or the block diagrams may be implemented by computer program instructions. These computer program instructions may be provided to a processor of a general-purpose computer, a specific-purpose computer, an embedded processor, or another programmable data processing device to produce a machine, such that instructions executed by the processor of the computer or other programmable data processing devices produce an apparatus for implementing the functions specified in one or more flows in the flowcharts and/or one or more blocks in the block diagrams.

These computer program instructions may also be stored in a computer-readable memory capable of directing a computer or other programmable data processing devices to operate in a specific manner, such that the instructions stored in the computer-readable memory produce an article of manufacture including an instruction device for implementing the functions specified in one or more flows in the flowcharts and/or one or more blocks in the block diagrams.

These computer program instructions may further be loaded to a computer or other programmable data processing devices, such that a series of operating steps are performed in the computer or the other programmable data processing devices to generate a computer-implemented process, such that the instructions executed in the computer or the other programmable data processing devices provide operations for implementing the functions specified in one or more flows in the flowcharts and/or one or more blocks in the block diagrams.

It should be understood that the terms "system" and "network" are often used interchangeably herein. In this disclosure, the term "and/or" is used only to describe an association relationship between associated objects and represents that three types of relationships may exist. For example, A and/or B may represent three conditions, i.e., the independent existence of A, the existence of both A and B, and the independent existence of B. In addition, the character "/" in the disclosure generally indicates that the associated objects before and after this character are in an "or" relationship.

The foregoing are only preferred embodiments of this disclosure, and are not intended to limit the scope of protection of this disclosure. All modifications, equivalent replacements and improvements made within the spirit and principles of this disclosure shall be included within the scope of protection of this disclosure.

## Claims

1. A method for determining a measurement parameter, comprising:
determining, by a reduced capability (RedCap) terminal device, the measurement parameter for the RedCap terminal device, based on first configuration information.

2. The method of claim 1, wherein the measurement parameter for the RedCap terminal device comprises:
a parameter for configuring a reference signal receiving power (RSRP) threshold of the RedCap terminal device in a special cell (SpCell).

3. The method of claim 2, wherein the measurement parameter for the RedCap terminal device comprises:
a parameter for a measurement of a non-serving cell by the RedCap terminal device.

4. The method of claim 2 or 3, wherein the first configuration information comprises:
SpCell measurement configuration information for the RedCap terminal device.

5. The method of claim 1, wherein the measurement parameter for the RedCap terminal device comprises:
a quality threshold for indicating a quality reporting of a measured cell by the RedCap terminal device in at least one of an idle state or an inactive state.

6. The method of claim 5, wherein the quality threshold comprises at least one of:
a quality threshold for a reference signal receiving power (RSRP); or
a quality threshold for a reference signal receiving quality (RSRQ).

7. The method of claim 5 or 6, wherein the first configuration information comprises:
idle state measurement configuration information for the RedCap terminal device.

8. The method of claim 1, wherein the measurement parameter for the RedCap terminal device comprises:
a parameter for a measurement configuration of the RedCap terminal device.

9. The method of claim 8, wherein the parameter for the measurement configuration of the RedCap terminal device comprises at least one of:
a beam measurement quality threshold for beam consolidation based on channel-state information reference signal (CSI-RS) measurement results by the RedCap terminal device;
a beam measurement quality threshold for beam consolidation based on synchronization signal block (SSB) measurement results by the RedCap terminal device;
a maximum number of CSI-RS measurement results which are to be averaged for each of beams by the RedCap terminal device;
a maximum number of SSB measurement results which are to be averaged for each of beams by the RedCap terminal device; or
an offset of a measurement result for a neighboring cell, used by the RedCap terminal device.

10. The method of claim 8 or 9, wherein the first configuration information comprises:
measurement object configuration information for the RedCap terminal device.

11. The method of claim 1, wherein the measurement parameter for the RedCap terminal device comprises:
a threshold for triggering a measurement report event of the RedCap terminal device.

12. The method of claim 11, wherein the threshold for triggering the measurement report event of the RedCap terminal device comprises at least one of:
a channel-state information reference signal (CSI-RS)-based reference signal receiving power (RSRP) threshold;
a CSI-RS-based reference signal receiving quality (RSRQ) threshold;
a CSI-RS-based signal to interference plus noise ratio (SINR) threshold;
a synchronization signal block (SSB)-based RSRP threshold;
an SSB-based RSRQ threshold; or
an SSB-based SINR threshold.

13. The method of claim 11 or 12, wherein the first configuration information comprises:
measurement report configuration information for the RedCap terminal device.

14. The method of claim 1, wherein the measurement parameter for the RedCap terminal device comprises:
a beam quality threshold for a beam failure recovery of the RedCap terminal device.

15. The method of claim 14, wherein the beam quality threshold for the beam failure recovery of the RedCap terminal device comprises:
a synchronization signal block (SSB)-based reference signal receiving power (RSRP) threshold.

16. The method of claim 15, wherein the first configuration information comprises:
beam failure recovery configuration information for the RedCap terminal device.

17. The method of claim 14, wherein the beam quality threshold for the beam failure recovery of the RedCap terminal device comprises at least one of:
a synchronization signal block (SSB)-based reference signal receiving power (RSRP) threshold; or
a channel-state information reference signal (CSI-RS)-based RSRP threshold.

18. The method of claim 17, wherein the first configuration information comprises:
beam failure recovery secondary cell (SCell) configuration information for the RedCap terminal device.

19. The method of any one of claims 1 to 3, 5, 6, 8, 9, 11, 12, 14, 15 and 17, wherein
the first configuration information comprises a measurement parameter for a first terminal device, the first terminal device and the RedCap terminal device supporting different capabilities.

20. The method of claim 19, wherein the measurement parameter for the RedCap terminal device is determined based on the measurement parameter for the first terminal device.

21. The method of claim 19 or 20, wherein the measurement parameter for the RedCap terminal device is determined based on a predefined rule.

22. The method of claim 21, wherein the predefined rule is associated with at least one of: a number of receiving antennas, or receiving antenna gain.

23. The method of claim 21 or 22, wherein the predefined rule comprises at least one of:
a value of the measurement parameter for the RedCap terminal device equals to a value obtained by subtracting a first value from a value of the measurement parameter for the first terminal device.

24. The method of any one of claims 1 to 23, wherein the measurement parameter for the RedCap terminal device is associated with at least one of:
a type of the RedCap terminal device;
a level of receiving antenna gain of the RedCap terminal device; or
a number of receiving antennas of the RedCap terminal device.

25. The method of claim 24, wherein the type of the RedCap terminal device is associated with at least one of:
the level of the receiving antenna gain of the RedCap terminal device; or
the number of the receiving antennas of the RedCap terminal device.

26. A method for determining a measurement parameter, comprising:
sending, by a network device, first configuration information, wherein the first configuration information is used for a reduced capability (RedCap) terminal device to determine the measurement parameter for the RedCap terminal device.

27. The method of claim 26, wherein the measurement parameter for the RedCap terminal device comprises:
a parameter for configuring a reference signal receiving power (RSRP) threshold of the RedCap terminal device in a special cell (SpCell).

28. The method of claim 27, wherein the measurement parameter for the RedCap terminal device comprises:
a parameter for a measurement of a non-serving cell by the RedCap terminal device.

29. The method of claim 27 or 28, wherein the first configuration information comprises:
SpCell measurement configuration information for the RedCap terminal device.

30. The method of claim 26, wherein the measurement parameter for the RedCap terminal device comprises:
a quality threshold for indicating quality reporting of a measured cell by the RedCap terminal device in at least one of an idle state or an inactive state.

31. The method of claim 30, wherein the quality threshold comprises at least one of:
a quality threshold for a reference signal receiving power (RSRP); or
a quality threshold for a reference signal receiving quality (RSRQ).

32. The method of claim 30 or 31, wherein the first configuration information comprises:
idle state measurement configuration information for the RedCap terminal device.

33. The method of claim 26, wherein the measurement parameter for the RedCap terminal device comprises:
a parameter for a measurement configuration of the RedCap terminal device.

34. The method of claim 33, wherein the parameter for the measurement configuration of the RedCap terminal device comprises at least one of:
a beam measurement quality threshold for beam consolidation based on channel-state information reference signal (CSI-RS) measurement results by the RedCap terminal device;
a beam measurement quality threshold for beam consolidation based on synchronization signal block (SSB) measurement results by the RedCap terminal device;
a maximum number of CSI-RS measurement results which are to be averaged for each of beams by the RedCap terminal device;
a maximum number of SSB measurement results which are to be averaged for each of beams by the RedCap terminal device; or
an offset of a measurement result for a neighboring cell, used by the RedCap terminal device.

35. The method of claim 33 or 34, wherein the first configuration information comprises:
measurement object configuration information for the RedCap terminal device.

36. The method of claim 26, wherein the measurement parameter for the RedCap terminal device comprises:
a threshold for triggering a measurement report event of the RedCap terminal device.

37. The method of claim 36, wherein the threshold for triggering the measurement report event of the RedCap terminal device comprises at least one of:
a channel-state information reference signal (CSI-RS)-based reference signal receiving power (RSRP) threshold;
a CSI-RS-based reference signal receiving quality (RSRQ) threshold;
a CSI-RS-based signal to interference plus noise ratio (SINR) threshold;
a synchronization signal block (SSB)-based RSRP threshold;
an SSB-based RSRQ threshold; or
an SSB-based SINR threshold.

38. The method of claim 36 or 37, wherein the first configuration information comprises:
measurement report configuration information for the RedCap terminal device.

39. The method of claim 26, wherein the measurement parameter for the RedCap terminal device comprises:
a beam quality threshold for a beam failure recovery of the RedCap terminal device.

40. The method of claim 39, wherein the beam quality threshold for the beam failure recovery of the RedCap terminal device comprises:
a synchronization signal block (SSB)-based reference signal receiving power (RSRP) threshold.

41. The method of claim 40, wherein the first configuration information comprises:
beam failure recovery configuration information for the RedCap terminal device.

42. The method of claim 39, wherein the beam quality threshold for the beam failure recovery of the RedCap terminal device comprises at least one of:
a synchronization signal block (SSB)-based reference signal receiving power (RSRP) threshold; or
a channel-state information reference signal (CSI-RS)-based RSRP threshold.

43. The method of claim 42, wherein the first configuration information comprises:
beam failure recovery secondary cell (SCell) configuration information for the RedCap terminal device.

44. The method of any one of claims 26 to 28, 30, 31, 33, 34, 36, 37, 39, 40 and 42, wherein
the first configuration information comprises a measurement parameter for a first terminal device, the first terminal device and the RedCap terminal device supporting different capabilities.

45. The method of claim 44, wherein the measurement parameter for the RedCap terminal device is determined based on the measurement parameter for the first terminal device.

46. The method of claim 44 or 45, wherein the measurement parameter for the RedCap terminal device is determined based on a predefined rule.

47. The method of claim 46, wherein the predefined rule is associated with at least one of: a number of receiving antennas, or receiving antenna gain.

48. The method of claim 46 or 47, wherein the predefined rule comprises at least one of:
a value of the measurement parameter for the RedCap terminal device equals to a value obtained by subtracting a first value from a value of the measurement parameter for the first terminal device.

49. The method of any one of claims 26 to 48, wherein the measurement parameter for the RedCap terminal device is associated with at least one of:
a type of the RedCap terminal device;
a level of receiving antenna gain of the RedCap terminal device; or
a number of receiving antennas of the RedCap terminal device.

50. The method of claim 49, wherein the type of the RedCap terminal device is associated with at least one of:
the level of the receiving antenna gain of the RedCap terminal device; or
the number of the receiving antennas of the RedCap terminal device.

51. A terminal device, the terminal device being a reduced capability (RedCap) terminal device and comprising:
a processing unit configured to determine a measurement parameter for the RedCap terminal device, based on first configuration information.

52. The terminal device of claim 51, wherein the measurement parameter for the RedCap terminal device comprises:
a parameter for configuring a reference signal receiving power (RSRP) threshold of the RedCap terminal device in a special cell (SpCell).

53. The terminal device of claim 52, wherein the measurement parameter for the RedCap terminal device comprises:
a parameter for a measurement of a non-serving cell by the RedCap terminal device.

54. The terminal device of claim 52 or 53, wherein the first configuration information comprises:
SpCell measurement configuration information for the RedCap terminal device.

55. The terminal device of claim 51, wherein the measurement parameter for the RedCap terminal device comprises:
a quality threshold for indicating quality reporting of a measured cell by the RedCap terminal device in at least one of an idle state or an inactive state.

56. The terminal device of claim 55, wherein the quality threshold comprises at least one of:
a quality threshold for a reference signal receiving power (RSRP); or
a quality threshold for a reference signal receiving quality (RSRQ).

57. The terminal device of claim 55 or 56, wherein the first configuration information comprises:
idle state measurement configuration information for the RedCap terminal device.

58. The terminal device of claim 51, wherein the measurement parameter for the RedCap terminal device comprises:
a parameter for a measurement configuration of the RedCap terminal device.

59. The terminal device of claim 58, wherein the parameter for the measurement configuration of the RedCap terminal device comprises at least one of:
a beam measurement quality threshold for beam consolidation based on channel-state information reference signal (CSI-RS) measurement results by the RedCap terminal device;
a beam measurement quality threshold for beam consolidation based on synchronization signal block (SSB) measurement results by the RedCap terminal device;
a maximum number of CSI-RS measurement results which are to be averaged for each of beams by the RedCap terminal device;
a maximum number of an SSB measurement result which are to be averaged for each of beams by the RedCap terminal device; or
an offset of a measurement result for a neighboring cell, used by the RedCap terminal device.

60. The terminal device of claim 58 or 59, wherein the first configuration information comprises:
measurement object configuration information for the RedCap terminal device.

61. The terminal device of claim 51, wherein the measurement parameter for the RedCap terminal device comprises:
a threshold for triggering a measurement report event of the RedCap terminal device.

62. The terminal device of claim 61, wherein the threshold for triggering the measurement report event of the RedCap terminal device comprises at least one of:
a channel-state information reference signal (CSI-RS)-based reference signal receiving power (RSRP) threshold;
a CSI-RS-based reference signal receiving quality (RSRQ) threshold;
a CSI-RS-based signal to interference plus noise ratio (SINR) threshold;
a synchronization signal block (SSB)-based RSRP threshold;
an SSB-based RSRQ threshold; or
an SSB-based SINR threshold.

63. The terminal device of claim 61 or 62, wherein the first configuration information comprises:
measurement report configuration information for the RedCap terminal device.

64. The terminal device of claim 51, wherein the measurement parameter for the RedCap terminal device comprises:
a beam quality threshold for a beam failure recovery of the RedCap terminal device.

65. The terminal device of claim 64, wherein the beam quality threshold for the beam failure recovery of the RedCap terminal device comprises:
a synchronization signal block (SSB)-based reference signal receiving power (RSRP) threshold.

66. The terminal device of claim 65, wherein the first configuration information comprises:
beam failure recovery configuration information for the RedCap terminal device.

67. The terminal device of claim 64, wherein the beam quality threshold for the beam failure recovery of the RedCap terminal device comprises at least one of:
a synchronization signal block (SSB)-based reference signal receiving power (RSRP) threshold; or
a channel-state information reference signal (CSI-RS)-based RSRP threshold.

68. The terminal device of claim 67, wherein the first configuration information comprises:
beam failure recovery secondary cell (SCell) configuration information for the RedCap terminal device.

69. The terminal device of any one of claims 51 to 53, 55, 56, 58, 59, 61, 62, 64, 65 and 67, wherein
the first configuration information comprises a measurement parameter for a first terminal device, the first terminal device and the RedCap terminal device supporting different capabilities.

70. The terminal device of claim 69, wherein the measurement parameter for the RedCap terminal device is determined based on a measurement parameter for the first terminal device.

71. The terminal device of claim 69 or 70, wherein the measurement parameter for the RedCap terminal device is determined based on a predefined rule.

72. The terminal device of claim 71, wherein the predefined rule is associated with at least one of: a number of receiving antennas, or receiving antenna gain.

73. The terminal device of claim 71 or 72, wherein the predefined rule comprises at least one of:
a value of the measurement parameter for the RedCap terminal device equals to a value obtained by subtracting a first value from a value of the measurement parameter for the first terminal device.

74. The terminal device of any one of claims 51 to 73, wherein the measurement parameter for the RedCap terminal device is associated with at least one of:
a type of the RedCap terminal device;
a level of receiving antenna gain of the RedCap terminal device; or
a number of receiving antennas of the RedCap terminal device.

75. The terminal device of claim 74, wherein the type of the RedCap terminal device is associated with at least one of:
the level of the receiving antenna gain of the RedCap terminal device; or
the number of the receiving antennas of the RedCap terminal device.

76. A network device, comprising:
a sending unit, configured to send first configuration information, wherein the first configuration information is used for a reduced capability (RedCap) terminal device to determine a measurement parameter for the RedCap terminal device.

77. The network device of claim 76, wherein the measurement parameter for the RedCap terminal device comprises:
a parameter for configuring a reference signal receiving power (RSRP) threshold of the RedCap terminal device in a special cell (SpCell).

78. The network device of claim 77, wherein the measurement parameter for the RedCap terminal device comprises:
a parameter for a measurement of a non-serving cell by the RedCap terminal device.

79. The network device of claim 77 or 78, wherein the first configuration information comprises:
SpCell measurement configuration information for the RedCap terminal device.

80. The network device of claim 76, wherein the measurement parameter for the RedCap terminal device comprises:
a quality threshold for indicating quality reporting of a measured cell by the RedCap terminal device in at least one of an idle state or an inactive state.

81. The network device of claim 80, wherein the quality threshold comprises at least one of:
a quality threshold for a reference signal receiving power (RSRP); or
a quality threshold for a reference signal receiving quality (RSRQ).

82. The network device of claim 80 or 81, wherein the first configuration information comprises:
idle state measurement configuration information for the RedCap terminal device.

83. The network device of claim 76, wherein the measurement parameter for the RedCap terminal device comprises:
a parameter for a measurement configuration of the RedCap terminal device.

84. The network device of claim 83, wherein the parameter for the measurement configuration of the RedCap terminal device comprises at least one of:
a beam measurement quality threshold for beam consolidation based on channel-state information reference signal (CSI-RS) measurement results by the RedCap terminal device;
a beam measurement quality threshold beam consolidation based on synchronization signal block (SSB) measurement results by the RedCap terminal device;
a maximum number of CSI-RS measurement results which are to be averaged for each of beams by the RedCap terminal device;
a maximum number of SSB measurement results which are to be averaged for each of beams by the RedCap terminal device; or
an offset of a measurement result for a neighboring cell, used by the RedCap terminal device.

85. The network device of claim 83 or 84, wherein the first configuration information comprises:
measurement object configuration information for the RedCap terminal device.

86. The network device of claim 76, wherein the measurement parameter for the RedCap terminal device comprises:
a threshold for triggering a measurement report event of the RedCap terminal device.

87. The network device of claim 86, wherein the threshold for triggering the measurement report event of the RedCap terminal device comprises at least one of:
a channel-state information reference signal (CSI-RS)-based reference signal receiving power (RSRP) threshold;
a CSI-RS-based reference signal receiving quality (RSRQ) threshold;
a CSI-RS-based signal to interference plus noise ratio (SINR) threshold;
a synchronization signal block (SSB)-based RSRP threshold;
an SSB-based RSRQ threshold; or
an SSB-based SINR threshold.

88. The network device of claim 86 or 87, wherein the first configuration information comprises:
measurement report configuration information for the RedCap terminal device.

89. The network device of claim 76, wherein the measurement parameter for the RedCap terminal device comprises:
a beam quality threshold for a beam failure recovery of the RedCap terminal device.

90. The network device of claim 89, wherein the beam quality threshold for the beam failure recovery of the RedCap terminal device comprises:
a synchronization signal block (SSB)-based reference signal receiving power (RSRP) threshold.

91. The network device of claim 90, wherein the first configuration information comprises:
beam failure recovery configuration information for the RedCap terminal device.

92. The network device of claim 89, wherein the beam quality threshold for the beam failure recovery of the RedCap terminal device comprises at least one of:
a synchronization signal block (SSB)-based reference signal receiving power (RSRP) threshold; or
a channel-state information reference signal (CSI-RS)-based RSRP threshold.

93. The network device of claim 92, wherein the first configuration information comprises:
beam failure recovery secondary cell (SCell) configuration information for the RedCap terminal device.

94. The network device of any one of claims 76 to 78, 80, 81, 83, 84, 86, 87, 89, 90 and 92, wherein
the first configuration information comprises a measurement parameter for a first terminal device, the first terminal device and the RedCap terminal device supporting different capabilities.

95. The network device of claim 94, wherein the measurement parameter for the RedCap terminal device is determined based on the measurement parameter for the first terminal device.

96. The network device of claim 94 or 95, wherein the measurement parameter for the RedCap terminal device is determined based on a predefined rule.

97. The network device of claim 96, wherein the predefined rule is associated with at least one of: a number of receiving antennas, or receiving antenna gain.

98. The network device of claim 96 or 97, wherein the predefined rule comprises at least one of:
a value of the measurement parameter for the RedCap terminal device equals to a value obtained by subtracting a first value from a value of the measurement parameter for the first terminal device.

99. The network device of any one of claims 76 to 98, wherein the measurement parameter for the RedCap terminal device is associated with at least one of:
a type of the RedCap terminal device;
a level of receiving antenna gain of the RedCap terminal device; or
a number of receiving antennas of the RedCap terminal device.

100. The network device of claim 99, wherein the type of the RedCap terminal device is associated with at least one of:
the level of the receiving antenna gain of the RedCap terminal device; or
the number of the receiving antennas of the RedCap terminal device.

101. A terminal device, comprising a processor and a memory for storing a computer program capable of running on the processor, wherein
the processor is configured to perform, when executing the computer program, the operations of the method for determining a measurement parameter of any one of claims 1 to 25.

102. A network device, comprising a processor and a memory for storing a computer program capable of running on the processor, wherein
the processor is configured to perform, when executing the computer program, the operations of the method for determining a measurement parameter of any one of claims 26 to 50.

103. A storage medium having stored thereon an executable program that, when executed by a processor, causes the processor to perform the method for determining the measurement parameter of any one of claims 1 to 25.

104. A storage medium having stored thereon an executable program that, when executed by a processor, causes the processor to perform the method for determining the measurement parameter of any one of claims 26 to 50.

105. A computer program product comprising computer program instructions that cause a computer to perform the method for determining the measurement parameter of any one of claims 1 to 25.

106. A computer program product comprising computer program instructions that cause a computer to perform the method for determining the measurement parameter of any one of claims 26 to 50.

107. A computer program causing a computer to perform the method for determining the measurement parameter of any one of claims 1 to 25.

108. A computer program causing a computer to perform the method for determining the measurement parameter of any one of claims 26 to 50.

109. A chip comprising a processor configured to invoke and run a computer program from a memory to cause a device on which the chip is mounted to perform the method for determining the measurement parameter of any one of claims 1 to 25.

110. A chip comprising a processor configured to invoke and run a computer program from a memory to cause a device on which the chip is mounted to perform the method for determining the measurement parameter of any one of claims 26 to 50.
